# EUROPÄISCHE PATENTSCHRIFT

(11) **EP 2 716 344 B1**
(45) Veröffentlichungstag und Bekanntmachung des Hinweises auf die Patenterteilung: **27.06.2018**
(21) Anmeldenummer: 13004640.2
(22) Anmeldetag: 25.09.2013
(51) Int. Cl.: B01D 41/04

(54) **Verfahren und Vorrichtung zur Regenerierung von Rußpartikelfiltern von Dieselmotoren**
Method and apparatus for regenerating soot particle filters from diesel engines
Procédé et dispositif de régénération de filtres à particules de suie de moteurs diesel

(30) Priorität: 02.10.2012 DE 102012019365
(43) Veröffentlichungstag der Anmeldung: 09.04.2014
(73) Patentinhaber: Marr, Holger, 56472 Großseifen (DE)
(72) Erfinder: Marr, Holger, 56472 Großseifen (DE)
(74) Vertreter: Wagner Albiger & Partner Patentanwälte mbB

(56) Entgegenhaltungen:
- WO-A1-2004/101112
- WO-A1-2008/042371
- DE-A1- 4 325 660
- US-A1- 2005 011 357

## Beschreibung

Die Erfindung bezieht sich auf ein Verfahren zur Regenerierung eines Rußpartikelfilters für die Abgasreinigung von Dieselmotoren insbesondere in Kraftfahrzeugen sowie auf eine Vorrichtung zur Durchführung des Verfahrens.

Beispielsweise beim Betrieb von mit Dieselkraftstoff gespeisten Verbrennungsmotoren von Kraftfahrzeugen werden bei der Verbrennung Abgase frei, die über eine Auspuffanlage nach aussen und damit in die Umwelt gelangen. Diese austretenden Abgase enthalten, neben anderen Schadstoffen, beispielsweise Kohledioxid, auch als Feinststaub vorliegende Rußpartikel, die die Umwelt, insbesondere von Städten, äußerst stark belasten. Aufgrund gesetzlicher Bestimmungen dürfen diese als Feinststaub vorliegenden Rußpartikel seit einigen Jahren bei neu zugelassenen Kraftfahrzeugen über die Abgasanlage nicht mehr in die Umwelt gelangen.

Um dies sicher zu stellen, werden in die Abgasanlagen von neu zugelassenen und mit Dieselkraftstoff betriebenen Kraftfahrzeugen sogenannte Rußpartikelfilter eingebaut. Diese Rußpartikelfilter sind in ihrem Inneren mit besonderen, Durchlassöffnungen aufweisenden Einbauten versehen, an denen sich die im Abgas als Feinststaub enthaltenen Rußpartikel als eine Art Asche auf den Einbauten des Rußpartikelfilters ablagern. Dies führt zwangsläufig dazu, dass sich die in den Einbauten vorhandenen Durchlassöffnungen allmählich zusetzen, wodurch einerseits der Differenzdruck - dies ist die Differenz des Druckes vor und hinter dem Rußpartikelfilter - ansteigt und sich andererseits auch der Verbrauch an Dieselkraftstoff allmählich erhöht. Dies wird durch besondere Maßnahmen am Rußpartikelfilter erkannt und löst gleichzeitig auch eine Erhöhung der Temperatur im Rußpartikelfilter aus. Durch diese Temperaturerhöhung werden die als Asche anhaftenden Rußpartikel verbrannt und als größere Aschenpartikel zusammen mit Kohlendioxid über die Abgasanlage ausgeblasen. Dieser Vorgang wiederholt sich, je nach Fahrzeug- bzw. Motortyp, etwa alle 800 bis 1500 km. Dennoch sammelt sich im Laufe der Zeit unbrennbare Asche an.

Je nach Fahrzeug- bzw. Motortyp sind die Rußpartikelfilter nach einer längeren Laufzeit, die in Abhängigkeit von der Art des Fahrprofils, beispielsweise Stadt- oder Autobahnverkehr, zwischen 100000 und 200000 km betragen kann, mit nicht verbrennbarer Asche fast vollständig verstopft. Dies bringt nicht nur einen hohen Differenzdruck und damit einen erhöhten Kraftstoffverbrauch mit sich, sondern macht zwangsläufig auch den Austausch des alten Rußpartikelfilters gegen einen neuen erforderlich, was je nach Fahrzeug-Modell mit verhältnismäßig hohen Kosten verbunden ist. Der aus der Abgasanlage des Fahrzeuges ausgebaute Rußpartikelfilter wird dann entweder entsorgt, wobei die darin enthaltenen, wertvollen Rohstoffe entweder verloren gehen oder durch ein aufwendiges Recycling-Verfahren zurückgewonnen werden können.

Die WO 2004/101112 A1 offenbart ein Verfahren zur Reinigung eines Partikelfilters, bei dem der Partikelfilter von einer Reinigungsflüssigkeit durchspült wird, wobei sich Durchströmungsphasen und Diffusionsphasen abwechseln. In der Diffusionsphase wirkt die Reinigungsflüssigkeit steht im Partikelfilter und wirkt ohne Strömung auf ihn an. Aus der WO 2008/042371 A1 ist bekannt, für die Reinigungsflüssigkeit eine säurehaltige Lösung zu verwenden. Zur Reinigung von Partikelfiltern schlägt die US 2005/0011357 A1 vor, die durch den Partikelfilter strömende Reinigungsflüssigkeit mit Ultraschallwellen zu beaufschlagen. Es besteht jedoch ein Bedarf an weiteren Reinigungsverfahren, die effizient sind und sich kostengünstig durchführen lassen.

Der Erfindung liegt deshalb die Aufgabe zugrunde, ein weiteres Verfahren aufzuzeigen, mit dem es in preiswerter Weise möglich ist, einen beispielsweise in einem Kraftfahrzeug normalerweise nicht mehr nutzbaren Rußpartikelfilter so zu regenerieren, so dass derselbe erneut in die Abgasleitung eines mit Dieselkraftstoff betriebenen Kraftfahrzeuges eingebaut und dort seine Funktion zur Ausfilterung von Rußpartikeln aus dem Abgasstrom erfüllen kann.

Zur Lösung dieser Aufgabe wird bei einem Verfahren gemäß der Erfindung vorgeschlagen, dass der ausgebaute und zu regenerierende Rußpartikelfilter in einer ersten Stufe zur Messung und Erfassung der Durchflussmenge von einem gasförmigen Medium durchströmt wird, dass der Rußpartikelfilter in einer zweiten Stufe über einen Zeitraum von etwa 5 bis 30 Minuten mit einer ersten Reinigungsflüssigkeit "A" mit einer Temperatur zwischen 60°C und 95°C gespült wird, dass der Rußpartikelfilter in einer dritten Stufe mit einer säurehaltigen Reinigungsflüssigkeit "B" gefüllt und nach einer Verweilzeit von etwa 100 bis 220 Minuten mit derselben ebenfalls gespült wird, dass der Rußpartikelfilter in einer vierten Stufe über einen Zeitraum von etwa 10 Minuten mit erwärmtem Klarwasser mit einer Temperatur von 60°C bis 90°C gespült und dass der Rußpartikelfilter in einer fünften Stufe erneut zur Messung und Erfassung der Durchflussmenge wieder von einem gasförmigen Medium durchströmt und gereinigt wird.

Durch ein solches, mehrstufiges Verfahren, welches mindestens einmal bei normalerweise nicht mehr nutzbaren Rußpartikelfiltern wiederholt werden kann, werden nicht nur wertvolle Rohstoffe eingespart, sondern es werden auch nicht unbeachtliche Kosten vermieden. Darüber hinaus wird durch die mit diesem Verfahren regenerierten Rußpartikelfilter der Kraftstoffverbrauch der Kraftfahrzeuge verringert und somit die Umwelt weniger mit Kohlendioxyd belastet. Dieses Verfahren ist jedoch grundsätzlich bei Rußpartikelfiltern aller Dieselmotoren anwendbar.

Weitere Merkmale des erfindungsgemäßen Verfahrens sowie einer Vorrichtung zur Durchführung des Verfahrens sind in den Ansprüchen 2 bis 10 offenbart.

Das erfindungsgemäße Verfahren wird nachfolgend anhand eines in einer Zeichnung als Art Fließschema dargestellten Vorrichtung näher erläutert.

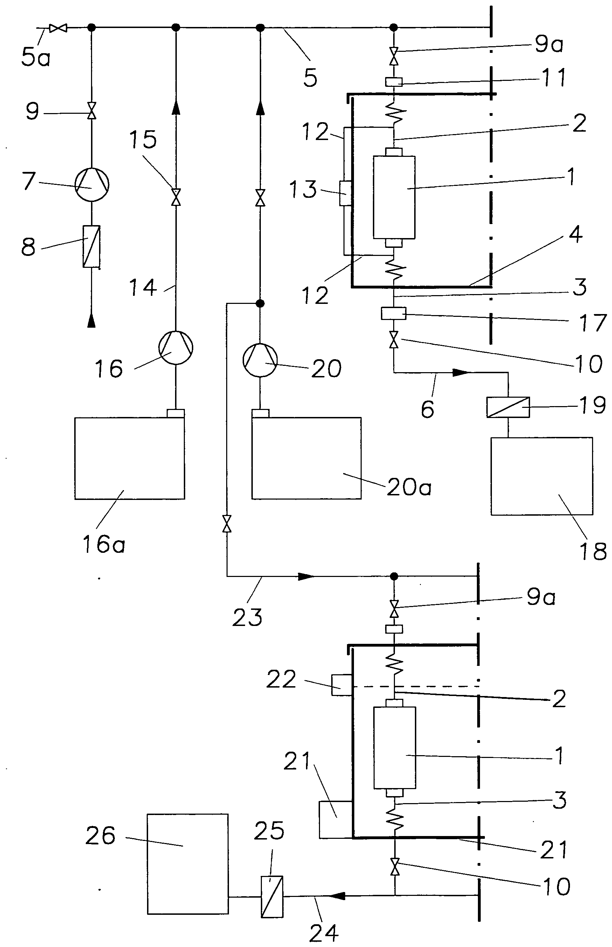

Die gezeichnete Vorrichtung dient zur Regenerierung bzw. zum sogenannten Refreshing von Rußpartikelfiltern 1, die sich während der Laufzeit eines mit Dieselkraftstoff betriebenen Verbrennungsmotors durch Rußpartikel so weit zugesetzt haben, dass der zwischen dem Eingangs- und Ausgangsdruck vorhandene Differenzdruck zu groß und damit die Reinigungsleistung nicht mehr ausreichend ist. Für die Regenerierung bzw. das Refreshing wird der nicht mehr funktionsfähige Rußpartikelfilter 1 aus der Abgasanlage des Fahrzeuges ausgebaut und mit seinem in der Zeichnung oben befindlichen Einlassende an eine Einlassleitung 2 und mit seinem unteren Auslassende an eine Auslassleitung 3 angeschlossen. Dazu sind sowohl die Einlassleitung 2 als auch die Auslassleitung 3 nicht nur flexibel, beispielsweise schlauchartig, ausgebildet, sondern auch an ihren Enden mit an sich bekannten und daher nicht eingezeichneten, kupplungsartigen Anschlussteilen bestückt, über die die Rußpartikelfilter 1 innerhalb kürzester Zeit mit der Einlassleitung 2 und der Auslassleitung 3 verbindbar sind.

In diesem Ausführungsbeispiel ragen die Einlassleitung 2 und die Auslassleitung 3 in einen nur teilweise gezeichneten, von oben bestückbaren und vorteilhaft mit einem abnehmbaren Deckel versehenen Behälter 4, in den der Rußpartikelfilter 1 eingesetzt, eingehängt oder auch nur eingelegt ist. Die Lage des Rußpartikelfilters 1 im Behälter 4 ist dabei für den Regenerierungsvorgang grundsätzlich unbedeutend. Der nur teilweise gezeichnete Behälter 4 ist jedoch normalerweise so groß ausgebildet, dass er mehr als nur einen Rußpartikelfilter 1 aufnehmen kann, die dann alle in der vorbeschriebenen Weise über die kupplungsartigen Anschlussteile mit jeweils einer Einlassleitung 2 und jeweils einer Auslassleitung 3 verbunden sind. Alle Einlassleitungen 2 sind an eine gemeinsame Zuführleitung 5 angeschlossen und alle Auslassleitungen 3 münden in eine gemeinsame Abführleitung 6.

Bei der Regenerierung bzw. dem Refreshing des Rußpartikelfilters 1 wird nun in einer ersten Stufe über die Zuführleitung 5 von einem Gebläse 7 mit vorgeschaltetem Ansaugfilter 8 ein gasförmiges Medium, vorteilhaft Raumluft, in einer Menge von etwa 150 l/min in den Rußpartikelfilter 1 eingeblasen, welches dann über die Auslassleitung 3 abströmt. Dazu werden beispielsweise magnetisch gesteuerte Ventile 9, 9a und 10 geöffnet, so dass das gasförmige Medium den Rußpartikelfilter 1 durchströmen kann. In die Einlassleitung 2 ist ein Druckmesser 11 eingesetzt, der den Einlassdruck des strömenden gasförmigen Mediums überwacht. Ferner ist sowohl an die Einlassleitung 2 als auch an die Auslassleitung 3 eine Messleitung 12 angeschlossen, die jeweils mit einem Differenzdruckmesser 13 verbunden sind. Der gemessene Druck sowie der ermittelte Differenzdruck geben Auskunft über den Grad der Zusetzung des Rußpartikelfilters 1 und werden vorteilhaft aufgezeichnet und/ oder gespeichert. Im Anschluss daran wird das Gebläse 7 abgeschaltet und das Ventil 9 geschlossen.

In einer zweiten Stufe wird nun dem Rußpartikelfilter 1 eine Reinigungsflüssigkeit "A" über eine in die Zuführleitung 5 mündende Leitung 14 mit einem geöffneten Ventil 15 und einer Pumpe 16 zugeleitet. Diese Reinigungsflüssigkeit "A" befindet sich in einem Tank 16a und besteht beispielsweise aus einem biologisch abbaubaren Haushaltsreiniger mit einer Temperatur zwischen 60°C und 95°C, vorteilhaft 75°C. Die Temperatur des gasförmigen Mediums kann beispielsweise über einen Temperaturfühler 17 überwacht werden, der hier in die Auslassleitung 3 eingesetzt ist. Die Reinigungsflüssikeit "A" sollte etwa 5 bis 30 Minuten, vorteilhaft 15 Minuten, im Rußpartikelfilter 1 verbleiben, was erforderlich macht, dass das Ventil 10 in der Auslassleitung 3 geschlossen ist. Danach wird die Reinigungs-flüssikeit "A" durch Öffnen des Ventils 10 über die Auslassleitung 3 in einem Sammeltank 18 mit vorgeschalte tem Filter 19 für die Abtrennung der Rußpartikel abgelassen. Der Sammeltank 18 ist beispielsweise über einen Ölabscheider an ein Klämetz angeschlossen.

Nach dem Schließen der Ventile 10 und 15 wird eine andere Reinigungsflüssigkeit "B" in den Rußpartikelfilter 1 eingefüllt. Dies erfolgt über eine Pumpe 20 aus einem Tank 20a. Die Reinigungsflüssigkeit "B" besteht aus einer biologisch abbaubaren Säure, beispielsweise Zitronensäure. Es kann jedoch auch eine 3%ige schweflige Säure verwendet werden. Dies macht allerdings eine nachgeschaltete Neutralisierung erforderlich. Die Reinigungsflüssigkeit "B" sollte zumindest Raumtemperatur aufweisen und über einen Zeitraum von etwa 90 bis 220 Minuten, vorteilhaft 180 Minuten im Rußpartikelfilter 1 verbleiben. Danach kann noch eine kurzzeitige Spülung des Rußpartikelfilters 1 mit der Reinigungsflüssigkeit "B" erfolgen. Die gebrauchte Reinigungsflüssigkeit "B" wird aus der Auslassleitung 3 über eine nicht gezeichnete Leitung einem Sammeltank 26 zugeführt.

Anschließend wird in einer vierten Stufe der Rußpartikelfilters 1 noch über eine Leitung 5a mit Klarwasser mit einer Temperatur von 60°C bis 90°C, vorteilhaft 75°C über einen Zeitraum von etwa 10 Minuten gespült. Dies stellt sicher, dass keine Reste der Reinigungsflüssigkeit "B" im Rußpartikelfilter 1 verbleiben. Das Klarwasser gelangt dann in den Sammeltank 18.

In einer fünften Stufe wird schließlich in den Rußpartikelfilter 1 entsprechend der Stufe eins wieder über die Zuführleitung 5 von dem Gebläse 7 mit vorgeschaltetem Ansaugfilter 8 das bereits vorerwähnte gasförmiges Medium, also Raumluft, in einer Menge von etwa 150 l/min eingeblasen, welches über die Auslassleitung 3 abströmen kann. Dazu sind die Ventile 9, 9a und 10 wieder geöffnet. Dabei werden erneut der vorerwähnte Druck und der Differenzdruck gemessen und mit den in Stufe eins ermittelten Werten verglichen. Bei diesem Vergleich ist der erzielte Reinigungsgrad des Rußpartikelfilters 1 feststellbar.

Ist derselbe noch unzureichend, wird in einer sechsten Stufe der Rußpartikelfilter 1 wieder mit der Reinigungsflüssigkeit "B" gefüllt und Schwingungen, vorzugsweise im Ultraschallbereich, ausgesetzt. Dazu kann an den im Behälter 4 befindlichen Rußpartikelfilter 1 ein an sich bekannter Schwingungserzeuger angeschlossen werden. Befinden sich jedoch mehrere Rußpartikelfilter 1 im Behälter 4, hätte dies zur Folge, dass jeder Rußpartikelfilter 1 mit einem solchen Schwingungserzeuger versehen werden müsste, was wenig sinnvoll erscheint.

Eine einfachere Lösung besteht beispielsweise darin, in den Behälter 4 eine Flüssigkeit, beispielsweise Wasser, einzufüllen und an dem Behälter 4 einen im Ultraschallbereich arbeitenden Schwingungserzeuger anzubringen. Da der Behälter 4, wie oben beschrieben, jedoch auch ohne Flüssigkeit genutzt wird, wäre es erforderlich, die Flüssigkeit je nach Bedarf abzulassen und wieder neu einzufüllen. Um diesen Aufwand zu vermeiden, besitzt die erfindungsgemäße Vorrichtung einen zweiten Behälter 21, an dem beispielsweise aussen mindestens ein Schwingungserzeuger 21 a angebracht ist. Dieser Behälter 21 kann ständig mit Flüssigkeit gefüllt sein, deren Stand von einem Füllstandsmesser 22 überwacht wird. Auch in diesem Behälter 21 ist der Rußpartikelfilter 1 in gleicher Weise wie im Behälter 4 untergebracht und angeschlossen. Die Reinigungsflüssigkeit "B" wird hier von dem Tank 20a mittels der Pumpe 20 bei entsprechend geschalteten Ventilen über eine Leitung 23 dem Rußpartikelfilter 1 für die weiter oben beschriebene Behandlung zugeführt. Nach der Behandlung gelangt die Reinigungsflüssigkeit "B" über eine Leitung 24 mit Filter 25 in den bereits erwähnten Sammeltank 26. Im Anschluss daran wird der Rußpartikelfilter 1; wie bei Stufe vier beschrieben, wieder mit Klarwasser gespült.

Auch nach dieser Behandlung im Behälter 21 schließt sich wieder eine Behandlung gemäß Stufe eins an. Das bedeutet, dass jetzt wieder bei dem regenerierten bzw. refreshten Rußpartikelfilter 1 der Druck und der Differenzdruck ermittelt und mit den eingangs festgestellten Werten verglichen wird. Liegt der Reinigungserfolg unter 95%, ist von einer weiteren Nutzung des Rußpartikelfilters 1 abzuraten. Bei anderen Werten kann der Rußpartikelfilter 1 erneut eingebaut und genutzt werden.

### Bezugszeichenliste

- 1: Rußpartikelfilter
- 2: Einlassleitung
- 3: Auslassleitung
- 4: Behälter
- 5: Zuführleitung
- 5a: Leitung
- 6: Abführleitung
- 7: Gebläse
- 8: Ansaugfilter
- 9: Ventil
- 9a: Ventil
- 10: Ventil
- 11: Druckmesser
- 12: Messleitung
- 13: Differenzdruckmesser
- 14: Leitung
- 15: Ventil
- 16: Pumpe
- 16a: Tank
- 17: Temperaturfühler
- 18: Sammeltank
- 19: Filter
- 20: Pumpe
- 21: Behälter
- 21a: Schwingungserzeuger
- 22: Füllstandsmesser
- 23: Leitung
- 24: Leitung
- 25: Filter
- 26: Sammeltank

## Patentansprüche

1. Verfahren zur Regenerierung eines Rußpartikelfilters für die Abgasreinigung von Dieselmotoren insbesondere in Kraftfahrzeugen, **dadurch gekennzeichnet, dass** der ausgebaute und zu regenerierende Rußpartikelfilter in einer ersten Stufe zur Messung und Erfassung der Durchflussmenge von einem gasförmigen Medium durchströmt wird, dass der Rußpartikelfilter in einer zweiten Stufe über einen Zeitraum von etwa 5 bis 30 Minuten mit einer ersten Reinigungsflüssigkeit "A" mit einer Temperatur zwischen 60°C und 95°C gespült wird, dass der Rußpartikelfilter in einer dritten Stufe mit einer säurehaltigen Reinigungsflüssigkeit "B" gefüllt und nach einer Verweilzeit von etwa 100 bis 220 Minuten mit derselben ebenfalls gespült wird, dass der Rußpartikelfilter in einer vierten Stufe über einen Zeitraum von etwa 10 Minuten mit erwärmtem Klarwasser mit einer Temperatur von 60°C bis 90°C gespült und dass der Rußpartikelfilter in einer fünften Stufe erneut zur Messung und Erfassung der Durchflussmenge wieder von einem gasförmigen Medium durchströmt und gereinigt wird.

2. Verfahren nach Anspruch 1, **dadurch gekennzeichnet, dass** der Rußpartikelfilter in der dritten Stufe über einen Zeitraum von 30 bis 90 Minuten mit Schwingungen, vorzugsweise im Ultraschallbereich, beaufschlagt wird.

3. Verfahren nach Anspruch 1, **dadurch gekennzeichnet, dass** der Rußpartikelfilter in einer sechsten Stufe mit der Reinigungsflüssigkeit "B" gefüllt, mit Schwingungen, vorzugsweise im Ultraschallbereich, beaufschlagt und nach einer vorgegebenen Verweilzeit von 30 bis 90 Minuten über 5 bis 20 Minuten mit der Reinigungsflüssigkeit "B" gespült wird.

4. Verfahren nach einem der Ansprüche 1 bis 3, **dadurch gekennzeichnet, dass** der Rußpartikelfilter nach der Behandlung in Stufe fünf über einen Zeitraum von 5 bis 20 Minuten mittels Wasser mit einer Temperatur von 60 bis 90°C gespült und gereinigt wird.

5. Verfahren nach einem der Ansprüche 1 bis 4, **dadurch gekennzeichnet, dass** der Rußpartikelfilter in einem Flüssigkeitsbad in Schwingungen, vorzugsweise im Ultraschallbereich, versetzt wird.

6. Verfahren nach einem der Ansprüche 1 bis 5, **dadurch gekennzeichnet, dass** als Reinigungsflüssigkeit "A" ein biologisch abbaubares Reinigungsmittel, beispielsweise Haushaltsreiniger, verwendet wird.

7. Verfahren nach einem der Ansprüche 1 bis 6, **dadurch gekennzeichnet, dass** als Reinigungsflüssigkeit "B" eine biologisch abbaubares Säure, beispielsweise Zitronensäure, oder eine schwach säurehaltige Lösung, beispielsweise schweflige Säure, verwendet wird.

8. Vorrichtung zur Durchführung des Verfahrens nach Anspruch 1, **gekennzeichnet durch** mindestens einen Rußpartikelfilter (1) auswechselbar aufnehmenden und von oben bestückbaren Behälter (4), in dem die Einlassöffnung des Rußpartikelfilters (1) über eine Leitung (2) mit einem kupplungsartigen Anschlussteil mit der abwechselnd das gasförmige Medium, die Reinigungsflüssigkeiten "A" und "B" und das Klarwasser zuführenden Leitung (5) sowie die Auslassöffnung des Rußpartikelfilters (1) über eine Leitung (3) mit einem kupplungsartigen Anschlussteil mit der Abführleitung (6) verbindbar sind, wobei dem Behälter (4) ein einlassseitig und auslassseitig angeschlossener Differenzdruckmesser (13) zugeordnet ist.

9. Vorrichtung nach Anspruch 8, **dadurch gekennzeichnet, dass** an dem mit einer Flüssigkeit befüllbaren Behälter (4) ein im Ultraschallbereich arbeitender Schwingungserzeuger angebracht ist.

10. Vorrichtung nach Anspruch 8, **dadurch gekennzeichnet, dass** ein zweiter, mit einer Flüssigkeit befüllbarer Behälter 21 vorgesehen ist, an dem ein im Ultraschallbereich arbeitender Schwingungserzeuger (21a) angebracht ist.

## Claims

1. Method for regenerating a soot particle filter for purifying the exhaust gas of diesel engines, in particular in motor vehicles, **characterised in that**, in a first stage for measuring and detecting the flow rate, a gaseous medium flows through the removed soot particle filter to be regenerated, **in that** in a second stage the soot particle filter is rinsed with a first cleaning liquid "A" at a temperature between 60°C and 95°C for a period of approximately 5 to 30 minutes, **in that** in a third stage the soot particle filter is filled with an acidic cleaning liquid "B" and is also rinsed with the same after a residence time of approximately 100 to 220 minutes, **in that** in a fourth stage the soot particle filter is rinsed with heated clear water at a temperature of 60°C to 90°C for a period of approximately 10 minutes, and **in that**, in a fifth stage for measuring and detecting the flow rate, a gaseous medium again flows through and cleans the soot particle filter.

2. Method according to claim 1, **characterised in that** in the third stage the soot particle filter is subjected to vibrations, preferably in the ultrasonic range, for a period of 30 to 90 minutes.

3. Method according to claim 1, **characterised in that** in a sixth stage the soot particle filter is filled with the cleaning liquid "B", subjected to vibrations, preferably in the ultrasonic range, and is rinsed with the cleaning liquid "B" for 5 to 20 minutes after a predetermined residence time of 30 to 90 minutes.

4. Method according to any of claims 1 to 3, **characterised in that** the soot particle filter is rinsed and cleaned using water at a temperature of 60 to 90°C for a period of 5 to 20 minutes after the treatment in stage five.

5. Method according to any of claims 1 to 4, **characterised in that** the soot particle filter is caused to vibrate, preferably in the ultrasonic range, in a liquid bath.

6. Method according to any of claims 1 to 5, **characterised in that** a biodegradable cleaning agent, for example a household detergent, is used as the cleaning liquid "A".

7. Method according to any of claims 1 to 6, **characterised in that** a biodegradable acid, for example citric acid, or a weakly acidic solution, for example sulphurous acid, is used as the cleaning liquid "B".

8. Device for carrying out the method according to claim 1, **characterised by** at least one container (4) which accommodates at least one soot particle filter (1) in an exchangeable manner and can be fitted from above, in which the inlet opening of the soot particle filter (1) can be connected, via a line (2) having a coupling-like connecting part, to the line (5) alternately supplying the gaseous medium, the cleaning liquids "A" and "B" and the clear water, and the outlet opening of the soot particle filter (1) can be connected, via a line (3) having a coupling-like connecting part, to the discharge line (6), wherein a differential pressure meter (13) connected on the inlet side and on the outlet side is associated with the container (4).

9. Device according to claim 8, **characterised in that** a vibration generator operating in the ultrasonic range is attached to the container (4), which can be filled with a liquid.

10. Device according to claim 8, **characterised in that** a second container, which can be filled with a liquid, is provided and a vibration generator (21a) operating in the ultrasonic range is attached to said container 21.

## Revendications

1. Procédé de régénération d'un filtre à particules de suie pour la dépollution de gaz d'échappement de moteurs diesels en particulier dans des véhicules automobiles, **caractérisé en ce que** le filtre à particules de suie démonté et à régénérer est soumis dans une première étape à un flux d'un fluide gazeux afin de mesurer et détecter le débit,
**en ce que** le filtre à particules de suie est rincé dans une deuxième étape avec un premier liquide de nettoyage "A" à une température comprise entre 60 °C et 95 °C pendant un laps de temps de 5 à 30 minutes environ,
**en ce que** le filtre à particules de suie est rempli dans une troisième étape avec un liquide de nettoyage "B" contenant de l'acide et est également rincé avec le même liquide après un temps de séjour de 100 à 220 minutes environ,
**en ce que** le filtre à particules de suie est rincé dans une quatrième étape avec de l'eau claire chauffée à une température de 60 °C à 90 °C pendant un laps de temps de 10 minutes environ
et **en ce que** le filtre à particules de suie est soumis à nouveau dans une cinquième étape à un flux d'un fluide gazeux afin de mesurer et détecter le débit et est nettoyé.

2. Procédé selon la revendication 1, **caractérisé en ce que** le filtre à particules de suie est soumis dans la troisième étape à des vibrations, de préférence dans le domaine des ultrasons, pendant un laps de temps de 30 à 90 minutes.

3. Procédé selon la revendication 1, **caractérisé en ce que** le filtre à particules de suie est rempli dans une sixième étape avec le liquide de nettoyage "B", est soumis à des vibrations, de préférence dans le domaine des ultrasons, et est rincé pendant 5 à 20 minutes avec le liquide de nettoyage "B" après un temps de séjour prédéterminé de 30 à 90 minutes.

4. Procédé selon l'une quelconque des revendications 1 à 3, **caractérisé en ce que**, après le traitement dans l'étape cinq, le filtre à particules de suie est rincé et nettoyé avec de l'eau à une température de 60 à 90 °C pendant un laps de temps de 5 à 20 minutes.

5. Procédé selon l'une quelconque des revendications 1 à 4, **caractérisé en ce que** le filtre à particules de suie est mis à vibrer, de préférence dans le domaine des ultrasons, dans un bain de liquide.

6. Procédé selon l'une quelconque des revendications 1 à 5, **caractérisé en ce qu'**on utilise comme liquide de nettoyage "A" un agent de nettoyage biodégradable, par exemple un nettoyant ménager.

7. Procédé selon l'une quelconque des revendications 1 à 6, **caractérisé en ce qu'**on utilise comme liquide de nettoyage "B" un acide biodégradable, par exemple de l'acide citrique, ou une solution faiblement acide, par exemple de l'acide sulfurique.

8. Dispositif destiné à la mise en oeuvre du procédé selon la revendication 1, **caractérisé par** un récipient (4) recevant de manière échangeable au moins un filtre à particules de suie (1) et pouvant être garni par le haut, récipient dans lequel l'ouverture d'entrée du filtre à particules de suie (1) peut être reliée par l'intermédiaire d'une conduite (2) munie d'une partie de raccordement du type couplage à la conduite (5) amenant en alternance le fluide gazeux, les liquides de nettoyage "A" et "B" et l'eau claire et l'ouverture de sortie du filtre à particules de suie (1) peut être reliée par l'intermédiaire d'une conduite (3) munie d'une partie de raccordement du type couplage à la conduite d'évacuation (6), un dispositif de mesure de différence de pression (13) raccordé côté entrée et côté sortie étant associé au récipient (4).

9. Dispositif selon la revendication 8, **caractérisé en ce qu'**un générateur de vibrations fonctionnant dans le domaine des ultrasons est placé au niveau du récipient (4) pouvant être rempli avec un liquide.

10. Dispositif selon la revendication 8, **caractérisé en ce qu'**il est prévu un deuxième récipient (21) qui peut être rempli avec un liquide et au niveau duquel est placé un générateur de vibrations (21a) fonctionnant dans le domaine des ultrasons.
